# EUROPEAN PATENT APPLICATION

(11) **EP 3 015 346 A1**
(43) Date of publication of application: **04.05.2016**
(21) Application number: 14893565.3
(22) Date of filing: 26.05.2014
(51) Int. Cl.: B62J 6/00

(54) **INTELLIGENT ENERGY SAVING CONTROL DEVICE FOR BICYCLE**

(71) Applicant: Lee, Wen-Sung, Taichung City 40861 (TW)
(72) Inventor: Lee, Wen-Sung, Taichung City 40861 (TW)
(74) Representative: Hellmich, Wolfgang
(86) International application number: PCT/CN2014/078379
(87) International publication number: WO 2015/180008

(57) **Abstract**

An intelligent power-saving control device for a bicycle comprises a bicycle light, a power generation member, a power source, and a detecting member electrically connected with one another. The detecting member includes a modulating unit, a converting unit, and a main control unit. The control unit is controlled the operation of the modulating member and the converting unit. When the power consumption of the bicycle light is low, the supplied power is supplied to the bicycle light and further modulated by the modulating unit to charge the power source. When the power consumption of the bicycle light is high, the power generation member and the power source are modulated by the modulating unit to compensate the insufficient power for one another so that the power generation member is kept operating in low power and the loading of pedaling is reduced.

## Description

### BACKGROUND OF THE INVENTION

### 1. Field of the Invention

The present invention relates to an equipment of a bicycle, and especially relates to an intelligent power-saving control device for a bicycle. The operation of the dynamo hub may effectively provide the necessary power to the bicycle light. And, it may reduce the loading of pedaling to make the rider pedal easily.

### 2. Description of Related Art

Riding bicycle has already become one of the main exercises in the society. Many people may ride the bicycle outdoors while they are free to achieve the effects of health, leisure, and cultivating the mind. The related products have been grown up along with the boom of the bicycle. The bicycle light is one of the most popular related products. The bicycle applied to the bicycle has the effects of warning and lighting. The light beam is used to pay attention to notice oneself or others by emitting or flashing light beam. In order to provide the effects of warning and lighting with the bicycle light, the most power source of the bicycle in the market is used the dry battery, mercury batter, or lithium battery to supply power. Although these batteries may supply the necessary power to the bicycle light, they may pollute the environment. The type of the above mentioned batteries may be eliminated due to environment friendly.

Please reference to Taiwanese patent no. M370563, it disclosed a bike power supply structure. It comprises a power generation device, a current-rectified voltage-regulated protection circuit, a power storing device, a lighting device, and a control device. The power generation device is installed at one wheel of a bicycle. When the bicycle is traveling and the wheel is rotating, an alternating current is generated by the power generation device and then outputted to the current-rectified voltage-regulated protection circuit to convert to a direct current which is outputted to and stored by the power storing device. A switch arranged on the control device is turned on/off the direct current to transmit to the lighting device. An adjusting knob of the control device which may turned up and down may control to adjust the magnitude of the direct current transmitted to the lighting device so as to control the intensity of the brightness generated from the lighting device.

The above mentioned structure is one of the related products generated from the modern technologies. That is the dynamo hub. The dynamo is mainly used for transforming the kinetic energy generated therefrom to the electric energy and further transmitted to the bicycle light for using. Therefore, the bicycle light may emit light beams without batteries to achieve the effect of environment friendly. The light source is controlled by the adjusting knob of the control device to truly effectively control the bicycle light On/OFF. However, when the power supply structure is applied in order to supply more power to the bicycle light for using, a large magnetic resistance may be generated to influence the operation of the bicycle and result in using more power while pedaling. Thus, riding becomes difficult and physical strength may be consumed greaty.

In view of the foregoing circumstances, the inventor has invested a lot of time to study the relevant knowledge, compare the pros and cons, research and develop related products. After quite many experiments and tests, the "intelligent power-saving control device for a bicycle" of this invention is eventually launched to improve the foregoing shortcomings, to meet the public use.

### SUMMARY OF THE IN VENTION

The main object of this invention is providing an intelligent power-saving control device for a bicycle. The power generating device may modulate the supply between the input power and the output power to supply adequate power to the bicycle light while riding. And further, it may prevent from generating too big resistance to influence riding so as to make the riding smooth.

In order to achieve above mentioned object, an intelligent power-saving control device for a bicycle comprises a bicycle light, having a lighting portion; a power generating member; a power source; and a detecting member, electrically connected with the power generating member, the power source, and the bicycle light, the detecting member includes a modulating unit, a converting unit, and a main control unit, the main control unit is respectively connected to the modulating unit and the converting unit to control the operations of the modulating unit and the converting unit, the power generating member and the power source are respectively electrically connected with the modulating unit and the converting unit, the converting unit is converted two alternating currents of the power generating member and the power source to a direct current to supply to the bicycle light for using, and the modulating unit is modulated a ratio of powers of the power generating member and the power source to supply to the bicycle light for using.

In some embodiments, the power source and the detecting member are arranged inside the power generating member and electrically connected with the power generating member.

In some embodiments, the power generating member is a dynamo charger or a dynamo hub.

In some embodiments, a power storage unit is further arranged inside the power source for store the power of the power generating member.

In some embodiments, a light sensor is further arranged inside the lighting portion of the bicycle light, and the light sensor is detected a light beam of a synthesis environment in front of the bicycle so as to adjust an illumination of the bicycle light.

In some embodiments, the main control unit further includes a receiving unit for receiving a change of the illumination of the lighting portion of the bicycle light, controlling the ration of the power of the modulating unit, and converting the alternating current and the direct current of the converting unit.

The effects of the present invention may be achieved and described as follows. The arrangement of the detecting member may control the power distribution of the power generation member and the power source based on the brightness of the front ambient light beams detected by the lighting portion of the bicycle light so as to make the power resistance of the power generation member to keep in low power. Therefore, the low power of the power generation member may reduce the loading of pedaling while riding to make the rider ride in the most comfortable way. Besides, the supplied powers of the power generation member and the power source modulated by the modulating unit arranged inside the detecting member may extremely reduce the excessively operation what the power generation member or the power source is processed to a single object and then the life time is shortened.

The various objects and advantages of the present invention will be more readily understood from the following detailed description when read in conjunction with the appended drawing.

### BRIEF DESCRIPTION OF THE DRAWINGS

FIG. 1 is a block diagram of an intelligent power-saving control device for a bicycle of the present invention;
FIG. 2 is an operation view of the intelligent power-saving control device for a bicycle of the present invention while the ambient light is stronger in front of the bicycle and the light beam of the lighting portion of the bicycle light is weaker; and
FIG. 3 is an operation view of the intelligent power-saving control device for a bicycle of the present invention while the ambient light is weaker in front of the bicycle and the light beam of the lighting portion of the bicycle light is stronger.

### DETAILED DESCRIPTION OF THE INVENTION

To describe clearly that the present invention achieves the foregoing object and function, the technical features and desired function are described with reference to a preferred embodiment and accompanying drawings.

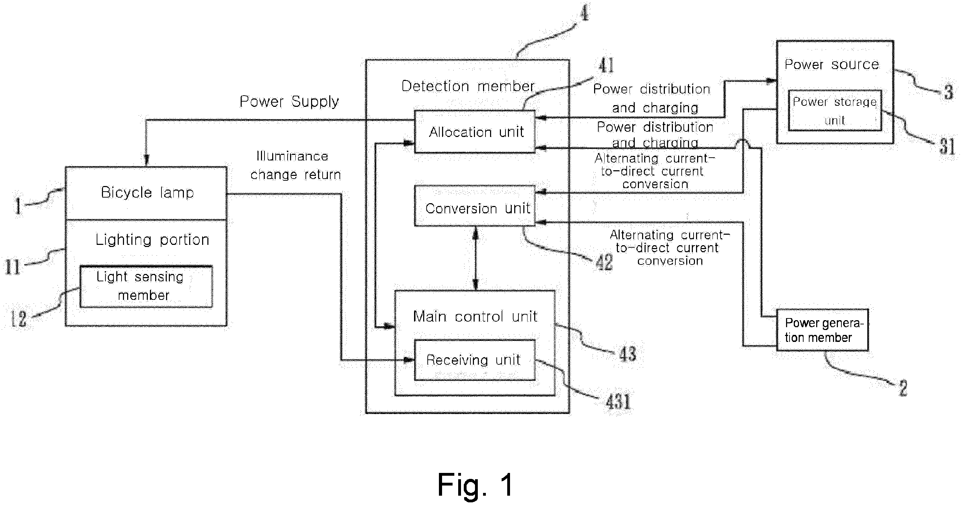

Please reference to FIGs. 1 to 3, an intelligent power-saving control device for a bicycle of the present invention may comprise a bicycle light 1, a power generation member 2, a power source 3, and a detecting member4. The bicycle light 1 has a lighting portion 11. The power generation member 2 is arranged at a bicycle freewheel of the bicycle and generated a power by riding the bicycle to supply to the bicycle light 1 for using. The power source 3 is supplied a power to the bicycle light 1. The power generation member 2 is electrically connected with the power source 3, the detecting member 4, and the bicycle light 1. The detecting member 4 further includes a modulating unit 41, a converting unit 42, and a main control unit 43, the main control unit 43 is connected to the modulating unit 41 and the converting member 42 and controlled the operation of the modulating unit 41 and the converting unit 42. The power generation member 2 and the power source 3 are respectively electrically connected with the modulating unit 41 and the converting unit 42. The converting unit 42 is converted the alternating currents(AC) of the power generation member 2 and the power source 3 to direct currents(DC) to supply to the bicycle light 1 for using. The modulating unit 41 is controlled and modulated a ratio of powers of the power generating member 2 and the power source 3 to supply to the bicycle light 1 for using. When the power consumption of the bicycle light 1 is low, the power generation member 2 is not only supplied the power the bicycle light 1 to use, but also the modulating unit 41 may be modulated the power to charge the power source 3. On the contrary, when the power consumption of the bicycle light 1 is high, the powers of the power generation member 2 and the power source 3 may be modulated by the modulating unit 41 to charge each other so that the power generation member 2 may keep operating in low power and reduce the loading of pedaling while riding bicycle.

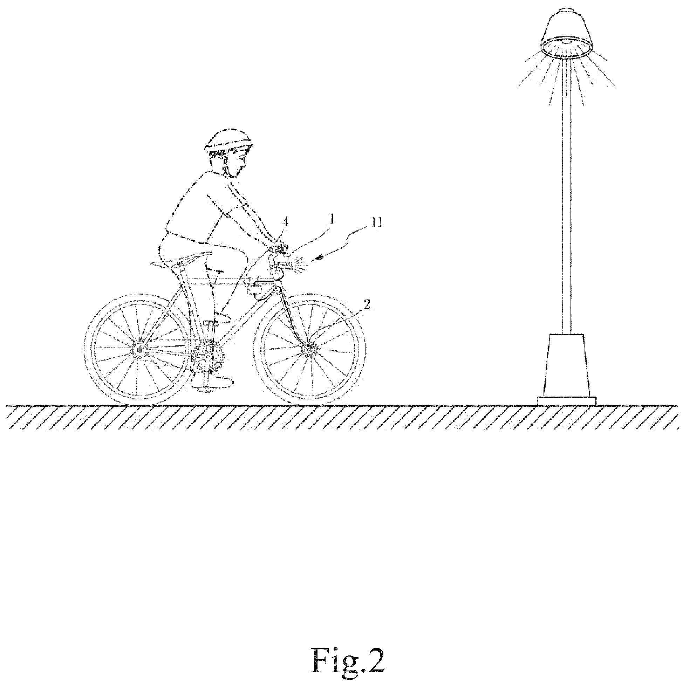

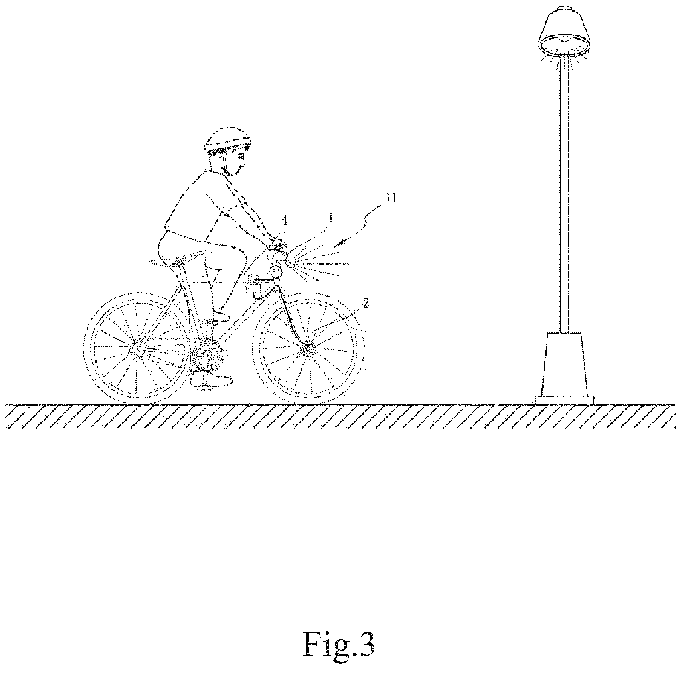

Please refer to FIGs. 2 and 3, when the rider is riding and using the bicycle light 1 installed on the bicycle, the lighting portion 11 of the bicycle 1 may detect a light beam of a synthesis environment in front of the bicycle so as to adjust an illumination of the bicycle light 1 and the detecting member 4 may control the powers of the power generation member 2 and the power source 3 based on the change of the illumination. When the power consumption of the bicycle light 1 is lower, the power of the power generation member 2 is supplied to the bicycle light 1 and further modulated a trace thereof by the modulating unit 41 to charge the power source 3. If the power consumption of the bicycle light 1 is increased higher and the power generation member 2 still keeps in low power, the power source 2 may supply power to compensate the insufficient power of the power generation member 2. And then, when the power source 3 becomes low power, the power generation member 2 may charge the power source 3 so that the power of the power source 3 may keep sufficient and the output of the power generation member 2 may be kept under the average output power through the arrangement of the power generation member 3, the power source 3, and the modulating unit 41 of the detecting member 4. Therefore, it may reduce the loading of pedaling while the rider is riding and the make the rider keep riding smoothly.

The arrangement of the power generation member 2, the power source 3, and the detecting member 4 of the present invention is that the power source 3 and the detecting member 4 are arranged inside the power generation member 2 and electrically connected with the power generation member 2 so as to reduce the space occupied with too many elements on the bicycle. The power generating member 2 may be a dynamo charger or a dynamo hub. The dynamo hub is used for a main embodiment of the present invention for illustration. Besides, the power generating member 2 may charge the power source 3 while the illumination of the bicycle light 1 is low or the current of the power source 3 is low. In order to efficiently use the charged power, a power storage unit 31 is further arranged inside the power source 3 for store the power of the power generating member 2. When the power of the power source 3 is insufficient or the power consumption of the bicycle light 1 is relatively low, the modulating member 41 may control the power of the power generation member 2 to store to the power storage unit 31 of the power source 3 and then supply the power of the power source 3 to the bicycle light 1 to use. The power generation member 2 may keep the output in low power and the loading of the bicycle may be reduced so as to provide smooth riding through the power generation member 2 and the power source 3 are simultaneously supplied power to the bicycle light 1, shown as in FIG. 1.

In addition, the design of the bicycle light 1 of the present invention is characterized by being capable for detecting the brightness of the light beams in the front environment and modulating the change of the illumination of the lighting portion 11. Therefore, a photosensing member 12 is further arranged inside the lighting portion 11 for detecting the light beams of the front environment. When the ambient light beams are sufficient, the lighting portion 11 of the bicycle light 1 may be controlled by the photosensing member 12 to reduce the illumination. In the contrary, when the ambient light beams are insufficient, the lighting portion 11 of the bicycle light 1 may be controlled to increase the illumination to truly light the front environment. Besides, the illumination of the lighting portion 11 of the bicycle light 1 may be changed through the arrangement of the photosensing member 12. The change of the illumination of the bicycle light 1 may be transmitted back to the main control unit 43 arranged inside the detecting member 4. Therefore, a receiving unit 431 is further arranged inside the main control unit 43. The change of the illumination of the bicycle 1 transmitted back to the receiving unit 431 may make the main control unit 43 more precisely control the operation of the modulating unit 41 and the converting unit 42. For example, the ration of output powers of the power generation member 41 and the power source 3 may be controlled and modulated by the modulating unit 41 or the conversion of the AC and DC of the power generation member 2 and the power source 3 may be controlled by the converting unit 42 so that the output powers of the power generation member 2 and the power source 3 may be supplied based on the best ratio of the power and the riding may be smooth but not be influenced, shown as in FIG. 1.

In conclusion, the arrangement of the modulating unit 41, the converting unit 42, and the main control unit 43 of the detecting member 4 may make the power generation member 2 and the power source 3 be capable for equally supplying the power to the bicycle light 1 for using while riding. Therefore, the power generation member 2 may be kept in a mean low output power and the rider may keep smooth riding and light loading. Besides, the bicycle light 1 may keep the necessary power and the intensity of the illumination of the lighting portion 11 may be not influenced.

The foregoing descriptions are merely the exemplified embodiments of the present invention, where the scope of the claim of the present invention is not intended to be limited by the embodiments. Any equivalent embodiments or modifications without departing from the spirit and scope of the present invention are therefore intended to be embraced.

The disclosed structure of the invention has not appeared in the prior art and features efficacy better than the prior structure which is construed to be a novel and creative invention, thereby filing the present application herein subject to the patent law.

## Claims

1. An intelligent power-saving control device for a bicycle, comprising:
a bicycle light, having a lighting portion;
a power generating member;
a power source; and
a detecting member, electrically connected with the power generating member, the power source, and the bicycle light, the detecting member includes a modulating unit, a converting unit, and a main control unit, the main control unit is respectively connected to the modulating unit and the converting unit to control the operations of the modulating unit and the converting unit, the power generating member and the power source are respectively electrically connected with the modulating unit and the converting unit, the converting unit is converted two alternating currents of the power generating member and the power source to a direct current to supply to the bicycle light for using, and the modulating unit is modulated a ratio of powers of the power generating member and the power source to supply to the bicycle light for using.

2. The intelligent power-saving control device as claimed in claim 1, wherein the power source and the detecting member are arranged inside the power generating member and electrically connected with the power generating member.

3. The intelligent power-saving control device as claimed in claim 2, wherein the power generating member is a dynamo charger or a dynamo hub.

4. The intelligent power-saving control device as claimed in claim 1, wherein a power storage unit is further arranged inside the power source for store the power of the power generating member.

5. The intelligent power-saving control device as claimed in claim 4, wherein a light sensor is further arranged inside the lighting portion of the bicycle light, and the light sensor is detected a light beam of a synthesis environment in front of the bicycle so as to adjust an illumination of the bicycle light.

6. The intelligent power-saving control device as claimed in claim 5, wherein the main control unit further includes a receiving unit for receiving a change of the illumination of the lighting portion of the bicycle light, controlling the ration of the power of the modulating unit, and converting the alternating current and the direct current of the converting unit.
